# EUROPEAN PATENT APPLICATION

(11) **EP 1 826 998 A1**
(43) Date of publication of application: **29.08.2007**
(21) Application number: 06398004.9
(22) Date of filing: 27.02.2006
(51) Int. Cl.: H04M 3/493, H04M 3/44, H04M 3/22

(54) **Method to accomplish the download of contacts into a phonebook of a telephone**

(71) Applicant: PT Comunicacoes SA, 1050-007 Lisboa (PT)
(72) Inventor: Da Graca Bau, Jose Manuel, 1170-124 Lisboa (PT); Barriga Geirinhas Santos, Antonio Luis, 2760-124 Caxias (PT); Baptista Lopes Freitas, Celia Susana, 2675-432 Odivelas (PT)
(74) Representative: Ferreira, Maria Silvina

(57) **Abstract**

The present invention relates to a method that allows carrying out the transfer or download of contacts to the telephone list of contacts, using some of the data already available in the telecommunication operator. This method will allow sending to user telephones a list of numbers and names corresponding to the most frequently called telephone numbers used in the telephone line where this equipment is or will be connected. This information will be sent through a SMS message with a predefined format and it is intended that the telephone adds these numbers to its list of telephone numbers in an automatic manner or, at most, with a simple and minimal intervention on the part of the user.

## Description

### FIELD OF THE INVENTION

The present invention relates to a method which allows the transfer or download of contacts to the telephone book, using data available from the telecommunication operator.

### PRIOR ART

The method that allows carrying out a service of Download to the List of Contacts via SMS is absolutely innovative and unique in the telecommunication sector, the applicant of the present application having no knowledge of such method being available either commercially or experimentally in any other telecommunication operator.

Determining the method necessary to carry out this service did not result from routine or merely operational work, but it is a result of an integrated project of Research and Development.

While the applicant ignores the existence of solutions that would allow carrying out the transfer or download of contacts to the list of contacts of a fixed phone, using data available in the telecommunication operator, namely, those that are most frequently called by the user, it is considered as prior art those mechanisms that currently allow the action of download or transfer of contacts to the telephone contact lists (fixed or mobiles). Examples of these solutions are the ones which use SIMcard, Bluetooth, Infrareds, PC Suite, etc.

### SUMMARY OF THE INVENTION

Voice telephone calls made from the fixed network is a practice that has reduced in the last few years, mostly due to the replacement effect of mobile phones. This decreasing trend of traffic originated from the fixed network is observed even from home where often the mobile phone is also used due to the ease of calling the destination numbers already stored in the Contact List, which is constantly constructed and updated by the user. The preference in updating the List of Contacts in the mobile phone is due mostly to the ease of transfer or downloads of contacts through solutions such as SIMcard, Bluetooth, Infrareds, PC Suite, etc.

These solutions have a marginal use, if at all, in fixed phones, which induce users to feel unmotivated to construct a telephone book in their phones. The lack of existence of a list of contacts in the fixed phone has as consequence a reduced use of the phone to make calls through the fixed network.

In order to satisfy this need, a mechanism has been developed which allows to carry out a transfer or download of contacts to the fixed phone list of contacts, using some of the data available in the telecommunication operator, *i.e*., those which refer to the numbers most frequently called by each user.

While the conception of this service is due to the gap found in fixed phones, the whole idea that gave rise to this service is perfectly applicable to mobile phones.

The underlying principles to the development of the Project were:
a) Ease of download of useful information;
b) Availability of a new service to a large number of users/clients;
c) Simplicity in using this new available service;
d) Minimal interference from the user.

Thus, it was established that the selection of useful information to the user could be made based on the history of the numbers most frequently called. This information is available in the telecommunication operator Databases.

In order to carry out the download of contacts to the telephone list of contacts, it has been decided to make use of SMS service, which is a feature already quite common in fixed phones.

Fixed phones should automatically process the information generated by the service, allowing the Download mechanism of the List of Contacts to be as transparent as possible to the user.

The service developed to solve the problem of the absence of a mechanism that allows readily carrying out the transfer or download of contacts to the fixed phone list of contacts, has an impact both on the telecommunication operator itself and the suppliers of telephone equipment.

The advantages of this new service, thus provided, of *Download of List of Contacts via SMS,* or the underlying idea thereof, in relation to the already existing solutions for the download or transfer of contacts are:
a) Its utilisation does not require interference on the user's part;
b) The user does not need to use any additional support to the basic functions of his/hers telephone, either software, hardware or communication medium;
c) It is not required that the user has any specific knowledge on the function of this new service;
d) The list of contacts is automatically downloaded with the numbers most frequently called by the user.

### BRIEF DESCRIPTION OF THE DRAWINGS

Figure 1 is a schematic representation of the SMSList of Contacts service architecture such as developed to be put into practice by the applicant of the present application.
Figure 2 is a schematic representation of an embodiment of requests received via SMS or IVR.
Figure 3 is a schematic representation of an embodiment of requests received in the Shops.
Figure 4 is a schematic representation of an embodiment of requests received in the client support service (users) of the corresponding telecommunication operator.
Figure 5 is a schematic representation of an embodiment of requests received in the client portal (user).

### DETAILED DESCRIPTION OF THE INVENTION

In the telecommunication operator an application is developed which operates on the Databases containing the user's communication history. This application verifies for a certain Telephone Line, which are the numbers most frequently called and what Name is associated therewith. Subsequently, the SMS messages with the information obtained are constructed.

The SMS messages that carry the information related to the user's contacts must follow a specific format that allows the telephone terminal to identify the service of download of contacts and automatically transfer information to the List of Contacts of the fixed phone.

On the side of the suppliers of telephone terminal, the feature of recognition of the SMS messages specific of this new service of Downloads of List of Contacts is developed, in order that these terminals can carry out the withdrawn of the information contained therein and subsequent effective and accurate download in the fixed phone list of contacts.

Below there is a detailed description of the methodology used in the implementation of this new *Download of List of Contacts via SMS Service,* in the telecommunication operator, applicant of the present invention application.

Firstly, the request of the service is made, which can be carried out by the user, through any of the following routes:
- In reply to a SMS presenting the service;
- Through an IVR service (IVR, Interactive Voice Response);
- In the telecommunication operator service's shops;
- Through the Client Support Service (user);
- In the telecommunication operator Client Portal (user).

Following the user's request, a Database (DB) is consulted with information based on the traffic already invoiced and a list of the n most frequent destinations called by that user is obtained. For each of the most frequent destinations called by the user, the Name associated therewith must be obtained.

In the case that there is no legal constraint associated to the manipulation of the user's data without his/hers explicit consent, the telecommunication operator will be able to carry out the updating of the List of Contacts of the user's phone, without his/hers request.

After establishing the information related to the most frequently called Numbers and respective associated Names, the SMS must be constructed, following the predefined format. These SMS are sent to the SMSC-RF platform of the Fixed Network that is responsible for the delivery to the telephone terminal of the user who made the request.

The fixed phone takes from the SMS the information related to the Numbers most frequently called by the user and respective Names, automatically downloading them in the List.

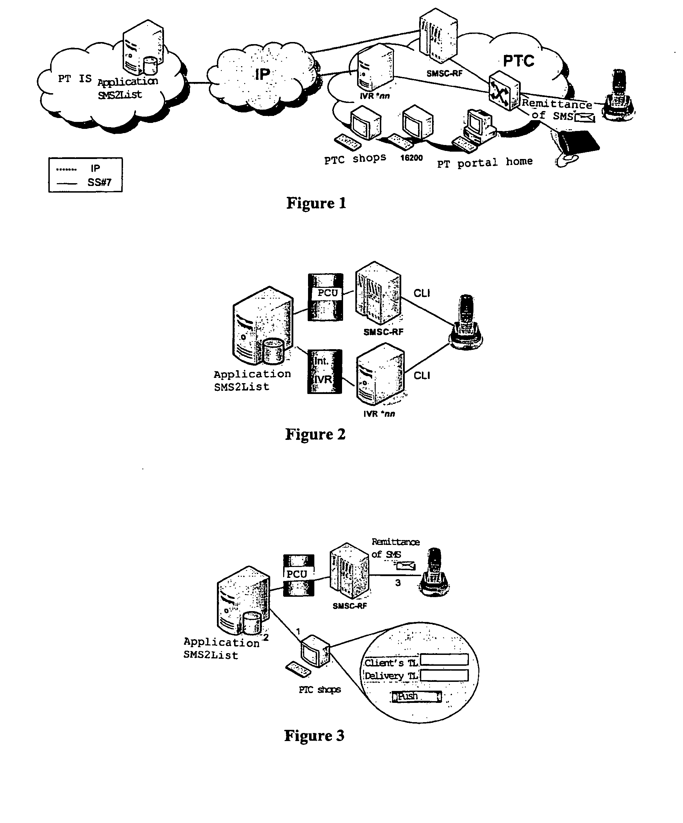

### Request of the service in Reply to a SMS presenting the service (Fig. 2)

When a SMS is sent presenting the service, it must be carried out using the application SMS Broadcast already existing in the telecommunication operator applicant of the present invention application, where the origin of the messages and the set of message recipients are defined, either by means of its explicit introduction or by means of a file.

In this case, a request of the service by the user is made by means of a SMS sent to the origin indicated in the Broadcaster.

In the case of using this means of request, the associated application must identify the origin of the SMS calling line (CLI - Calling Line Identification) sent by the user requesting the service, trigger the DB consultation process of the telecommunication operator and subsequent construction of SMSs with the information to be downloaded in the telephone List of Contacts. The interface between this application and the SMSC-RF platform will be carried out through the CPU protocol.

The SMSC-RF platform should indicate the success or failure of each request received from the SMSList of Contacts, preferably by means of a daily file, such as it is done today for IP Accounts.

### Request of the service through a IVR service (Fig. 2)

When the request for download of the List of Contact is made by means of a voice call to an IVR service, specifically developed for the purpose, the IVR identifies the service and requests the confirmation, which is done by means of pushing digits on the telephone (DTMF - Dual Tone Multifrequency).

In this case, it is necessary that an interface exist between the IVR and the application developed that allows the transfer of information regarding the identification of the calling line (CLI - Calling Line Identification) of the user who requested the service, fundamental so that the whole consulting process of the DB and construction of SMSs may be triggered with the information to be downloaded in the telephone List of Contacts.

It is possible to use a WebService to transfer the relevant information, such as the user's CLI, the service in question and others. This WebService must be triggered by the IVR for the application developed by PT - Information Systems (PT IS).

### Request of the Service in telecommunication operator's Shops (Fig. 3)

When a fixed telephone is purchased, the download of the list of contacts must be requested, through the introduction of the said request in a Web application, available for such effect, in the intranet of the telecommunication operator, applicant of the present invention application or via the Shop Portal - SFA.

In this case, the application associated therewith should request the user's telephone number since the Telephone Line where the SMS must be delivered (delivery TL) and the Telephone Line which will be object of consultation to obtain the data referring to the destinations most frequently called by the user (client TL) must be identified, in that it should also be questioned if the SMS should be sent to the number introduced or other, since when it is analysed whether or not the field corresponding to the Telephone Line of delivery (delivery TL) was filled, in the affirmative case, it will be in this Line that the pre-formatted SMS should be delivered. This procedure makes it possible to carry out the download to the List of Contacts of the terminal acquired in the shop itself.

Once the shop's Agent has confirmed the action of service request, the application should trigger the DB consultation process and construction of SMSs with the information to be downloaded in the List of Contacts. These SMSs should be delivered to the SMSC-RF platform. The interface between this application and the SMSC-RF platform will be carried out through the CPU protocol.

In order that the immediate success or failure of the action may be shown in the application available in the Shops, the SMS will have to be sent to the user with a request of Delivery Report.

If it is a new user, a request of Download of List of Contacts should not be made, as there is not yet any history in the telecommunication operator in relation to that user.

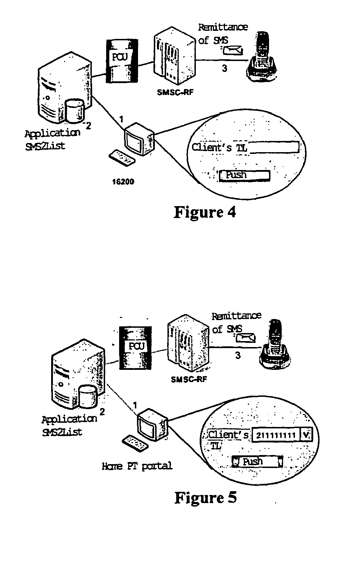

### Request of the Service via Client Support Service - User (Fig. 4)

In the client support service (users) there should be available the Web application that allows carrying out requests of downloads of the List of Contacts.

For the requests carried out from the application available in this means of service request, only the Telephone Line of the client who requests the service should be considered.

The Web application should request the telephone Number of the user who is requesting the service. After the confirmation of the action by the Agent, the application SMSList of Contacts should ascertain if the user has the SMS service Active. This confirmation is carried out through a consultation to the DB of the SMSC-RF platform. In the case that the user does not have the SMS Active, a specific error should be generated which should be returned to the Web application, allowing to clearly identify the reason of failure and the process ends. In the case that the SMS is Active, the application SMSList of Contacts should trigger the DB consultation process and subsequent construction of the SMSs with the information to be downloaded in the List of Contacts. These SMSs should be taken to the SMSC-RF platform, which in turn sends them to the telephone where the download of contacts should be made. The interface between this application and the SMSC-RF platform will be carried out through the CPU protocol.

In order to be possible to ascertain whether or not the user has the SMS Active, a DB of the SMSC-RF platform should be consulted, through an interface based on HTTP.

In order that the immediate success or failure of the action may be shown in the application available in the Client Support Service, the SMS will have to be sent to the user with a request of Delivery Report.

### Request of the Service in the Client Portal - User of the Telecommunication Operator (Fig. 2)

The request of download of List of contacts via SMS should also be available in the telecommunication operator client Portal (user).

The request can only be carried out after authentication by the user. Following the identification process, the user must select in which telephone he/she intends to update the List of Contacts. The selection will be carried out through a combo box that contains the telephone numbers associated to his/hers PIN (Personal Identification Number). In the case that the user has only one associated number, this must be already selected.

For the requests made by this route the Telephone Line selected by the authenticated user must be considered through the combo box which contains the number associated to his/hers PIN.

It must also be visible in the application the indication of Success or Failure of the action. If the reason for Failure is due to the fact that the user does not have the SMS Active, this information must be clearly identified and the process ends. In order that the immediate success or failure may be shown in the client portal, a SMS will have to be sent with a request of Delivery Report.

In order to be possible to verify whether or not the user has the SMS service Active, the DB of the SMSC-RF platform must be consulted, through an interface based on HTTP.

The application to be developed must receive the requests coming from the different routes possible of requests aforementioned.

For the requests received through a SMS or through the IVR service, a list of the *n* most frequent numbers called by the CLI that made the request must be obtained.

For the users with the SMS service Active, a list of the n most frequent destinations called by the Telephone Line that made the request must be obtained, based on the history of traffic invoiced by the telecommunication operator. The destination selection criteria are:
I) Destinations called more than *x* times;
II) Among those, the *n* most called;
III) In the case of more than *n* destinations, all with the same number of calls, only the *n* destinations most recently called should be considered.

The information that will serve to create the list of contacts should be based on the last three months of invoicing (time during which the invoicing data in the telecommunication operator system are kept). This information should be updated once a month.

The quantity of destinations most frequently called to be downloaded in the List of Contacts must configurable (Top n) . The application must also have as a configuration parameter the condition of the number called more than x times.

For each of de Destinations found, a "Name" must be associated to the holder of this number. Due to legal constraints, only the destinations belonging to the users of the telecommunication operator, applicant of the present patent application should be considered. As only will be considered the destinations belonging thereto, it is enough to consult the information already available in the operator, in order to obtain the Name associated to each Top n Number of destinations most frequently called.

For each destination found, it is necessary to verify if they belong to users of the telecommunication operator that have requested the Caller Line Identification Restriction or that have requested confidentiality in the information services from the telecommunication operator in the SFT Adhesion Agreement. In the affirmative case, the associated "Name" should not be sent, only the users' "Number".

Due to limitation in most of the existing fixed phones in the market, there is a great interest in limiting the number of characters associated to the "Number" and "Name" to be sent in the SMS message. Therefore, is defined a maximum length of 20 characters for the "Number". For the "Name" there should be considered only the first and last names of the user, limited to a maximum of 15 characters. Additionally, there must be a delimitating character to indicate when a new "Number" or new "Name" start.

Based on the information collected, a SMS should be constructed in a format predefined, in order to be subsequently interpreted by the client's telephone terminal. In all cases, except when the requests originate from the application available in the telecommunication operator shops, the SMSs are delivered to the Telephone Line that requested the service.

The application developed for the purpose should make available daily reports regarding the use of the service that allow verifying the level of use thereof.

This novel service, developed by using the method of the present invention, has some global limitation that should be taken into consideration:
- The SMSs sent to the telephone must follow the current ETSI norm (derived from GSM), which, amongst other limitations, only allows SMSs to be sent with 160 characters of 7 bits or multiples of this value;
- Fixed phones that will "understand" these new SMSs may have very limited software capabilities, therefore will not support much complexity, forcing a simple specification;
- The telephones that receive these special SMSs should not need altering the capacity of the List of Contacts;
- The new service should be as transparent as possible for the user.

A SMS message is composed by a maximum of 160 characters of 7 bits. Eventually, the messages will be able to be composed by long messages formed by multiples of 160 characters. There are also other possibilities to send 8-bit/character messages, which totals a maximum of 140 characters per SMS message, or still 16-bit/character, which totals 70 characters per message.

Regarding this new service, only are considered the SMS messages as defined in the two following rules:
[R1] - In the case the information exceeds 160 characters, then the message will be split into two or more SMS messages of 160 characters.
[R2] - Each SMS will have to contain, mandatorily, an integral number of registers. Messages with partial data of 1 register will not be validated.

The SMS message will have to contain suitable information so that the fixed phone can be prepared to receive and understand as being a command from the SMSList of Contacts. At the beginning of the text the SMS message must have a coded information to indicate that it is a special message from the SMSList of Contacts service, as defined in the following example:

| | | | | | | | | | | | | | | | | |
|---|---|---|---|---|---|---|---|---|---|---|---|---|---|---|---|---|
| Position | 1 | 2 | 3 | 4 | 5 | 6 | 7 | 8 | 9 | 10 | 11 | 12 | 13 | 14 | 15 | 16 |
| Character | # | P | T | C | a | ... | ... | ... | ... | ... | ... | ... | ... | ... | ... | ... |

- Characters 1-4: identify PT Comunicações "#PTC", as this service is specific of this telecommunication operator, since such service does not exist specified in a norm;
- Character 5: identifies the service, 1 character is reserved for this type of indication: character "a" = adds to the list, other characters can be used to represent other services.

In order to avoid other SMS messages to be generated with the format defined in this document, the field DCS will be used normalized for SMS messages, as described in the following rule:
- To prevent any person to be able to send a SMS to another person such as downloading the telephone list with a SMSList message, the SMS specific heading must have the field DCS (SMS Data Coding Scheme) with the class 2 (bits 1.0 = "10" SIM specific message) instead of the class 0 (bits 1.0 = "00"), since only the telecommunication operator, applicant of the present invention application, has authority to sent SMSs with this field altered.

After the heading, follows a sequence of registers to be placed in the List of Contacts. Each register needs to transport, mandatorily, a valid telephone number and then, optionally, a name.

The format of each register to be added to the List of Contacts will be:
Start of register: character "<"
   Telephone number: a telephone number containing only the characters 0,1,2,3,4,5,6,7,8,9,*,# ending with a space.
   Name: A chain of characters containing all characters of the name including some spaces necessary for the correct understanding of the name. Maximum of 15 characters.
End of register: character ">".
   The registers are shown in a row without any delimitating character.

A register may have just a number without associated name. Registers with just a name are not valid.

### Examples of Valid Registers

<244555666 Joäo Nuno>
Valid number and name (general case 1)
Note: "ã" (Letter A with tilde) is not part of the SMSs alphabet.

<277123456 CELINA TRANCOSO>
Valid number and name (general case 2)
The name has the maximum limit of 15 characters.

<00351239444202>
   A register without name may be sent. In this example the number is an international number.
<215001111 >
   A space after the number may be sent, although there is no name.

### Examples of Non-Valid Registers

<244555666 João Nuno>
   Non-valid name: It has a character that is not part of the default alphabet. The SMS server would not be able to send this character, unless the SMS message was sent in the 8-bit/character alphabet. In the SMSs default alphabet the only accented characters are: èéùìòÇÉÄÖÑÜäöñü.
<2771234567 CRISTIANO RONALDO>
   Unsuitable Name. The stored name will be only "CRISTIANO RONAL".
   The telephone will ignore the last 2 characters.
<277 495395 RUI LOPES>
   Non-valid number. The space between 277 and 495333 will be interpreted as a separation between the number and the name.
   The number added to the list will be "277" and the name will be "495395 RUI LOPE".
<+351965162105 DANIEL LINO>
   Non-valid number. It has the character + which is not valid. The register will not be added to the List.

### <RUI MARQUES>

Non-valid number. There is no number, therefore it will not be added to the List.

### SMS Informative Message

There is nothing to prevent the telecommunication operator responsible for this service from sending a SMS message just before or after the List updating SMS to say that your list "will be" or "has been" updated. However, any procedure of this type is not presently defined.

The telephones that receive a SMS message of the SMSList of Contacts type with the heading and coded data according to that previously indicated in the section, will add registers to the List of Contacts taking into considerations the following general procedures:
P1 - If the message has "#PTCa" at the start but it does not have the field DCS with "class 2", save it as any SMS;
P2 - If the received register number exists in the List with number and name, ignore the number that arrived (do not alter the register in the List);
P3 - If the number exists in the List, but the name does not exist yet, put the existing register name in the position where only the number existed (the number is the same);
P4 - If the List is full, unable to support new registers, do not add the new register, ignore it.
P5 - If none of the above occurs, add the register to the list.
P6 - If all the SMSList registers are transferred to the telephone list, then the SMS will not be available in the received SMS;
P7 - If all of the registers have not been transferred to the telephone list, for example, because it is full when the SMSList was received, the SMS must stay in the list of received SMSs.

### Example of a SMSList

The final formats of the two SMS messages used to send 10 registers to be added to the List of a telephone through the SMSList service according to the method of the present invention are presented below:
Contents of SMS 1: (6 registers)

| |
|---|
| #PTCa<236444666 MARIA LUISA><219999888 ANTONIO |
| MARTINS><9610020030 EFIGENIA SOARES><249333444 FARMAC. |
| CENTRAL><289111222 ALBINO NEVES><00341251123123> |

| |
|---|
| Note: The DCS Byte of SMS has to have "class 2" (SIM specific message) |

Contents of SMS 1: (4 registers)

| |
|---|
| #PTC@<0055219999888 Alexandre Gomes><270270270 D. |
| Copperfield><250519320 Manuel M.><278888000 TeleVotoTV SA> |

| |
|---|
| Note: The DCS Byte of SMS has to have "class 2" (SIM specific message) |

In brief, the rules for carrying out a SMS suitably appropriate for this service are as follows:
R1- If the information exceeds 160 characters, then the alteration message will have to be split into 2 or more SMS messages of 160 characters.
R2 - Each SMS will have to contain, mandatorily, an integral number of registers. Messages with partial data of 1 register will not be validated.
R3 - At the beginning of the text the SMS message must have a coded information to indicate that it is a special message from the SMSList of Contacts service.
R4 - To prevent any person to be able to send a SMS to another person such as downloading the telephone list with the SMSList message, the SMS specific heading must have the field DCS (SMS Data Coding Scheme) with the class 2 (bits 1.0 = "10" SIM specific message) instead of the class 0 (bits 1.0 = "00").
R5 - The format of each register to be added to the telephone list will be:
   Start of register: character "<"
      Telephone number: a telephone number containing only the characters 0,1,2,3,4,5,6,7,8,9,*,# ending with a space.
      Name: A chain of characters containing all characters of the name including some spaces necessary for the correct understanding of the name. Maximum of 15 characters.
   End of register: character ">".
      The registers are shown in a row without any delimitating character.
R6 - The register may have just a number without associated name. Registers with just a name are not valid.

### BIBLIOGRAPHY

[1]- ETSI ES 201 912 v1.1.1 (2002-01), "Access and Terminals (AT); Short Message Service (SMS) for PSTN/ISDN; Short Message Communication between a fixed network Short Message Terminal Equipment and a Short Message Service Centre", ETSI, January 2002.
[2]- ETSI TS 100 900 v7.2.0 (1999-07), "Digital cellular telecommunications system (Phase 2+); Alphabets and language-specific information (GSM 03.38 version 7.2.0 Release 1998), ETSI, July 1999.
[3]- ETSI TS 100 901 v7.5.0 (2001-12), "Digital cellular telecommunications system (Phase 2+); Technical realization of the Short Message Service (SMS) Point-to-Point (PPP) (3GPP TS 03.40 version 7.5.0 Release 1999), ETSI, December 2001.
   Lisbon,

## Claims

1. A method for carrying out a transfer or download of contacts to the contact list of a telephone, **characterized in that** it comprises the following sequence of procedures:
a) optionally, request of the service on the part of the client/user;
b) trigger the consultation process to the operator's database;
c) construction of SMS messages, following a predefined format with the information to be downloaded to the telephone;
d) send SMS messages to the SMSC platform, which is responsible for the delivery of the information to be downloaded to the client's telephone;
e) automatic download to the telephone list of contacts of the information related to the Numbers most frequently called by the client and respective Names.

2. The method for carrying out a transfer or download of contacts to the contact list of a telephone according to Claim 1, **characterized in that** a request on the part of the user is carried out via one of the following routes: in reply to a SMS message presenting the service; through an IVR service (Interactive Voice Response); in the telecommunication operator's shops; through the Client Support Service; in the telecommunication operator client portal.

3. The method for carrying out a transfer or download of contacts to the contact list of a telephone according to Claim 1, **characterized in that** the interface between the application that identifies the origin of the request and the SMSC platform is carried out through the PCU protocol.

4. The method for carrying out a transfer or download of contacts to the contact list of a telephone according to Claim 1, **characterized in that** it is necessary to ascertain that the user has the SMS service Active, by means of a consultation to the SMSC platform database, through an interface based on HTTP.

5. The method for carrying out a transfer or download of contacts to the contact list of a telephone according to Claim 1, **characterized in that** the construction of SMS messages follow the following rules:
- If the information exceeds 160 characters, then the alteration message will have to be split into 2 or more SMS messages of 160 characters.
- Each SMS will have to contain, mandatorily, an integral number of registers. Messages with partial data of 1 register will not be validated.
- At the beginning of the text the SMS message must have a coded information to indicate that it is a special message from the SMSList of Contacts service.
- To prevent any person to be able to send a SMS to another person such as downloading the telephone list with the SMSList message, the SMS specific heading must have the field DCS (SMS Data Coding Scheme) with the class 2 (bits 1.0 = "10" SIM specific message) instead of the class 0 (bits 1.0 = "00").
- The format of each register to be added to the telephone list will be:
Start of register: character "<"
Telephone number: a telephone number containing only the characters 0,1,2,3,4,5,6,7,8,9,*,# ending with a space.
Name: A chain of characters containing all characters of the name including some spaces necessary for the correct understanding of the name. Maximum of 15 characters.
End of register: character ">".
The registers are shown in a row without any delimitating character.
- The register may have just a number without associated name. Registers with just a name are not valid.
Lisbon,
